# EUROPEAN PATENT SPECIFICATION

(11) **EP 1 826 066 B1**
(45) Date of publication and mention of the grant of the patent: **10.08.2016**
(21) Application number: 07075132.6
(22) Date of filing: 14.02.2007
(51) Int. Cl.: B60R 9/042

(54) **Object carrying device provided with a blocking mechanism**
Eine mit einem Sperrmechanismus versehene Vorrichtung zum Befördern von Gegenständen
Dispositif porteur d'objets doté d'un mécanisme de blocage

(30) Priority: 24.02.2006 IT MO20060069
(43) Date of publication of application: 29.08.2007
(73) Proprietor: Fami S.R.L., 36027 Rosà (VI) (IT)
(72) Inventor: Camellini, Giancarlo, 41014 Castelvetro (IT)
(74) Representative: Gotra, Stefano

(56) References cited:
- DE-A1- 3 107 196
- GB-A- 2 411 626

## Description

### Description.

The invention relates to an object-carrying device, of a type comprising a fixed frame mounted on a vehicle and a mobile frame predisposed to support at least an object to be transported.

The invention is particularly applicable in the sector of accessories and equipment for work vehicles, such as vans, trucks and the like.

In particular, the invention relates to an object-carrying device which is associable to the roof of vehicles for transport of unwieldy objects, such as for example ladders, trestles and/or similar work equipment.

As is known, object-carrying devices are generally constituted by a fixed frame, associable to the roof of a respective work vehicle by special connecting organs, and a mobile frame, slidably engaged on the fixed frame and supporting an object to be transporter.

Usually the mobile frame can be activated to move from a rest condition, in which it lies on a plane overlying the lie plane of the fixed frame, and a work condition, in which it is easily accessible by the operator who can remove and/or replace the transported object.

Normally, object-carrying devices are provided with special blocking mechanisms which keep the mobile frame and the fixed frame together when the mobile frame is in the rest position. In this way the mobile frame is immobilised in the rest position during the movements of the vehicle to which it is associated.

The blocking mechanism is associated to the fixed frame and comprises a hook element destined to engage the mobile frame in order to keep the mobile frame in the rest position.

The blocking mechanism further comprises a safety device provided with a bolt which is slidable on the fixed frame between a stop position, in which it is arranged below the hook element which is maintained in the engaged position, and a released position, in which it is distanced from the hook element which can be disengaged from the mobile frame in order to free the mobile frame.

The safety device is further provided with suitable blocking elements predisposed to maintain the bolt in the stop position or the release position.

In particular the blocking elements include a sphere, housed in a seating afforded in the fixed frame, which is engageable by action of a spring in two seatings afforded in the bolt. To move the bolt from one position to the other a sufficient force must be exerted to disengage the sphere from the seating in which it is engaged.

The blocking mechanism further includes a command rod for controlling the movement of the bolt of the safety device and the blocking element.

The command rod exhibits an arrow-shaped end which can be inserted between the bolt and a suitable striker element for blocking the hook element in the position in which it is engaged in the mobile frame. The command rod can also be inserted between the bolt and the hook element to free the hook element and consequently the mobile frame.

An example of the above blocking mechanism is described and illustrated in patent application no. IT-MO2004A000198. Document DE 3 107 196 A1 discloses a device according to the preamble of claim 1.

In relation to the above-described prior art, the applicant has noted that although the blocking mechanisms of the known object-carrying devices are able to maintain the mobile frame in a solidly engaged condition to the fixed frame, they are subject to certain drawbacks, mainly in relation to the practicalness of the activating of the hook element and the bolt of the safety device, as well as the structural simplicity of the mechanism itself.

In particular, it has been found that despite the presence of the command rod, the complex structure of the mechanism requires the direct intervention of the operator to unblock the safety device bolt which inhibits the movement of the hook element. The operator's direct intervention leads to the performing of one or more movements that differ from the usual manoeuvring operations for displacing the bolt from one position to the other or the movement of the blocking element. Consequently the activating of the blocking mechanism requires a high number of manoeuvring operations which lengthen the time needed to unblock the mobile frame from the fixed frame.

Further, owing to the height of work vehicles, the fixed frame for object-carrying devices is not easily reachable by the operator who must reach the level of the safety device in order to unblock it by operating directly on the blocking mechanism.

The aim of the present invention is to obviate the above-mentioned drawbacks by providing a blocking mechanism which is easily manoeuvrable.

In particular, the aim of the present invention is to simplify the unblocking operation of the mobile frame with respect to the fixed frame and to facilitate the operator in the execution of the manoeuvre.

The precise technical task and the specified aims are substantially attained by an object-carrying device provided with a blocking mechanism according to what is set out in the appended claims.

Further characteristics and advantages of the present invention will better emerge from the detailed description that follows of an embodiment of the invention, illustrated purely by way of non-limiting example in the accompanying figures of the drawings, in which:
Figure 1 is a front perspective view of the blocking mechanism of the present invention, associated to a mobile frame, partially illustrated, of an object-carrying device which is omitted for reasons of clarity;
Figure 2 is a perspective view from behind of the mechanism of the preceding figure;
Figure 3 is a further perspective view from the front of the mechanism of the preceding figures, illustrated in a first use condition of a command rod associated thereto;
Figure 4 is a further perspective view of the mechanism of the preceding figures, illustrated in a second use condition of the command rod;
Figure 5 is a perspective view from behind of the mechanism, illustrated in the use condition of the command rod as illustrated in figures 3 and 4;
Figure 6 is a front perspective view of the mechanism of the preceding figures, illustrated in a third use condition of the command rod;
Figure 7 is a perspective view from behind of the mechanism of the preceding figures, illustrated in the condition illustrated in figured
Figure 8 is an elevation of an object-carrying device provided with the blocking mechanism of the preceding figures and suitably mounted on a work vehicle.

With reference to the figures of the drawings, 1 denotes in its entirety the blocking mechanism of the present invention.

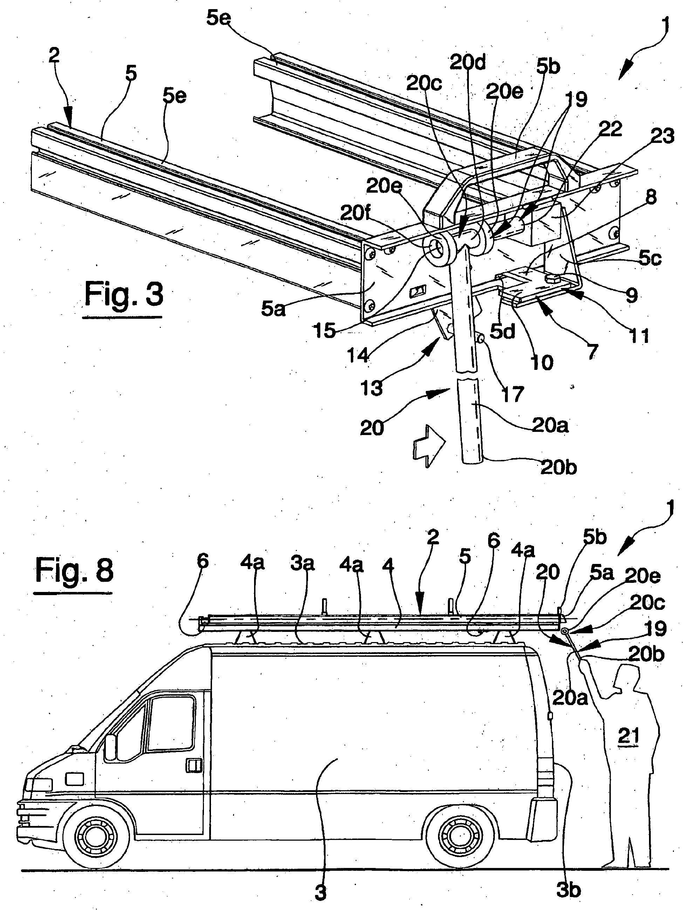

The mechanism 1 is operatively associated to an object-carrying device 2 (figure 8) predisposed to support at least a large object (not illustrated), such as a ladder, a trestle and/or a similar object.

As can be seen in figure 8, the object-carrying device 2 is mounted on the roof 3a of a work vehicle 3, such as for example a van, a truck and/or a like means of transport.

The object-carrying device 2 comprises a fixed frame 4, fixed on the roof 3a of the vehicle 3 by means of suitable attachment flanges 4a.

The object-carrying device 2 further comprises at least a mobile frame 5 operatively associated to the fixed frame 4. In detail, the mobile frame 5 is slidably engaged to the mobile frame 4 by means of suitable connecting organs 6. The mobile frame 5 is free to slide from a non-use position (figure 8) in which it lies on at least a plane which is substantially parallel to the lie plane of the fixed frame 4, and a use position (not illustrated as known) in which the mobile frame 5 lies on a plane which is transversal to the lie plane of the fixed frame 4, in a position by the side of the back part 3b of the vehicle. When the mobile frame 5 is in the non-use position, it exhibits a terminal portion 5a, provided with a special gripping handle 5b, facing the opposite side with respect to the back part 3b of the vehicle 3.

As illustrated in figures from 1 to 7, the mechanism 1 comprises engaging means 7 operatively associated to the object-carrying device 2 for reciprocal engaging of the fixed frame 4 and the mobile frame 5.

The mechanism 1 is arranged on the mobile frame 5 so that the engaging means 7 are operatively active on the fixed frame 4 in order to guarantee the reciprocal engagement between the fixed frame 4 and the mobile frame 5.

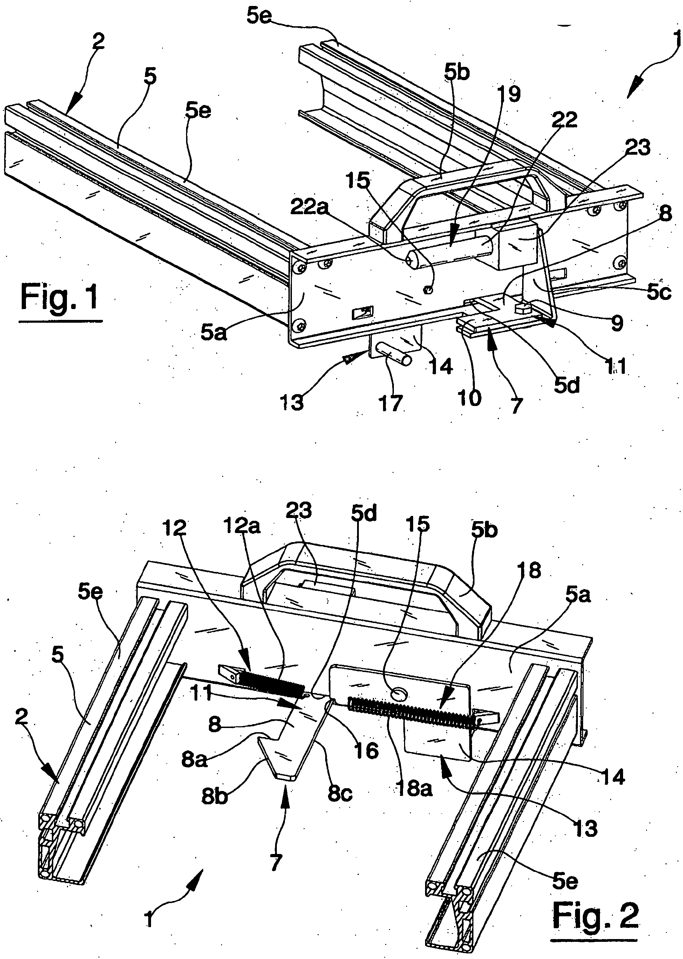

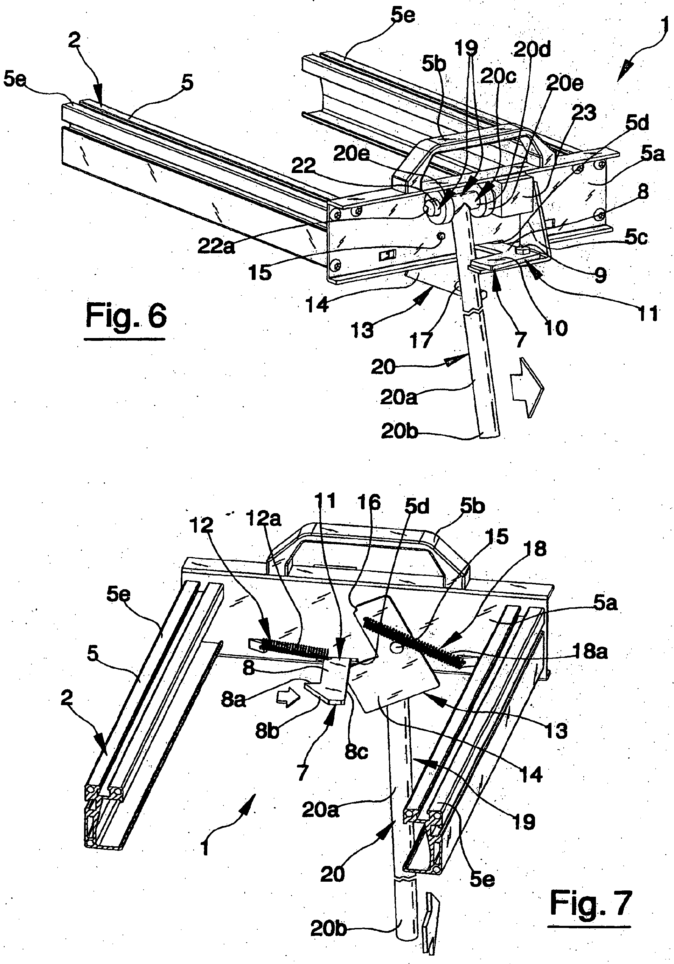

The engaging means 7 comprise at least a hook element 8 operatively connected to the mobile frame 5. The hook element 8 is mobile between an engaged position (figures 1-5) in which it engages the fixed frame 4 to maintain the fixed frame 4 united to the mobile frame 5, and a disengaged position (figure 6 and 7) in which it does not engage the fixed frame 4. When the hook element 8 is in the disengaged position (figures 6 and 7), he mobile frame 5 is free of the fixed frame 4 so that the mobile frame 5 can easily be displaced from the non-use position (figure 8) into the use position.

The hook element 8 is preferably rotatably engaged to the mobile frame 5 in order to rotate between the engaged position and the disengaged position. In particular, the hook element 8 is rotatably engaged to the mobile frame 5 by means of a first connecting pin 9 and a support flange 5c projecting from the terminal portion 5a of the mobile frame 5.

As can be seen in figures from 1 to 7, the hook element 8 exhibits at least a contrast portion 8a predisposed to interact with the fixed frame 4 to hold the hook element 8 in the engaged position. The hook element 8 further exhibits at least a pushing portion 8b, inclined with respect to the contrast portion 8a to bring the hook element 8 towards the disengaged position when the mobile frame 5 is united with the fixed frame 4. The pushing portion 8b is predisposed to interact with the fixed frame 4 in such a way that, following a displacement of the hook element 8 along a substantially parallel direction to the longitudinal development of the object-carrying device 2, the pushing portion 8b intercepts the fixed frame 4, determining a displacement of the hook element 8 along a transversal direction to the longitudinal development of the object-carrying device.

The engaging means 7 further comprise a first manoeuvring appendage 10 engaged to the hook element 8 for activating a movement of the hook element 8 at least from the engaged position (figure 1-5) to the disengaged position (figures 6 and 7).

The hook element 8 and the first manoeuvring appendage 10 are made in a single piece to form a plate structure 11, substantially L-shaped and lying on a substantially parallel plane to the lie plane of the mobile frame 5. The hook element 8 develops through an opening 5d afforded in The terminal portion 5a in such a way that the contrast portion 8a and the pushing portion 8b are arranged on opposite sides with respect to the first manoeuvring appendage 10 and the first connecting pin 9.

The contrast portion 8a and the pushing portion 8b of the hook element 8 are arranged internally of the structure of the mobile frame 5, while the first connecting pin 9 and the first manoeuvring appendage 10 are arranged externally of the structure of the mobile frame 5.

The engaging means 7 are further provided with at least an elastic recall element 12, preferably a helix spring 12a, for displacing the hook element 8 towards the engaged position. In detail, the elastic recall element 8 is operatively interposed between the terminal portion 5a and the hook element 8 to stretch when the hook element 8 distances from the engaged position towards the disengagement position.

As illustrated in figures 2, 5 and 7, the elastic recall element 12 operates internally of the structure of the mobile frame 5 between the hook element 8 and one of the lateral crossbars 5e of the mobile frame 5.

The mechanism 1 advantageously further comprises at least a safety device 13 which is operatively associated to the engaging means 7 to inhibit the movement of the hook element 8 from the engaged position (figures 1-5) to the disengaged position (figures 6 and 7). In particular, the safety device 13 can be switched between a stop condition, in which it interferes with the hook element 8 to keep the hook element 8 in the engaged position, and a release position, in which it does not interfere with the hook element 8, enabling movement from the engaged position to the disengaged position.

The safety device 13 exhibits a substantially L-shaped plate structure 14. The structure 14 develops on a transversal lie plane, preferably perpendicular, to the lie plane of the hook element 8 and the first manoeuvring appendage 10 thereof. Further, the plate structure 14 is preferably rotatably engaged to the terminal portion 5a by means of a second connecting pin 15.

As can be seen in figures 2, 5 and 7, the structure 14 of the safety device 13 exhibits a striker portion 16 predisposed to engage the hook element 8 to keep the hook element 8 in the engaged position (figures 1-5) when the safety device 13 is in the stop condition.

The striker portion 16 is advantageously complementarily countershaped to a side 8c of the hook element 8 in order correctly to engage the hook element 8 when the safety device 13 is in the stop condition 13.

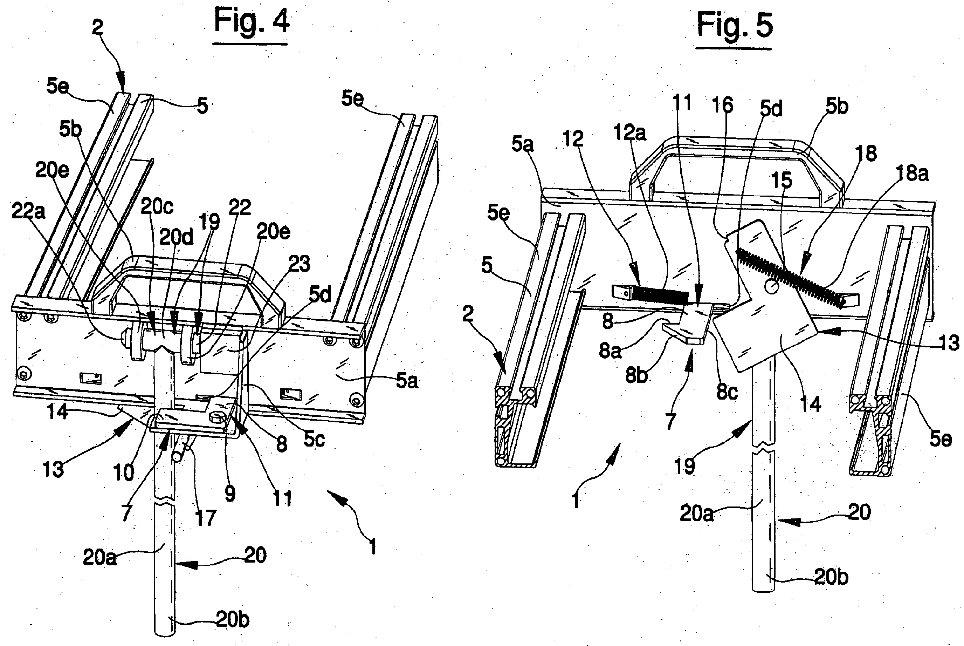

A second manoeuvring appendage 17 is further associated to the structure 14 (figures 1, 3, 4, 6), which second manoeuvring appendage 17 is destined to switch the safety device 13 at least from the stop condition (figure 2) to the release condition (figures 5 and 7).

The second manoeuvring appendage 17 exhibits a substantially cylindrical conformation and develops transversally, preferably perpendicular, to the lie plane of the structure 14 and substantially parallel with respect to the lie plane of the hook element 8.

As can be seen in figures 2, 5 and 7, the safety device 13 is advantageously provided with an elastic movement organ 18, operatively interposed between the structure 14 and the terminal portion 5a to assist the switching of the safety device 13 from the stop condition (figure 2) to the release condition (figures 5 and 7). In particular, the elastic movement organ 18 preferably comprises a helix spring 18a. The helix spring 18a is preferably pre-tensioned and ready to shift sharply to free the hook element 18 from the safety device 13.

With reference to figures from 3 to 8, the mechanism 1 further comprises commanding means 19 which are operatively associable to the mobile frame 5 to switch the safety device 13 at least from the stop condition to the release condition. The commanding means 19 are advantageously able to switch the safety device 13 from the release condition to the stop condition. Preferably the commanding means 19 are realised in such a way as also to act on the hook element 8 to displace the hook element 8 at least from the engaged position to the release position.

In the illustrated embodiment, the commanding means 19 comprise at least a command rod 20 exhibiting an elongate tubular structure 20a which defines at least a gripping end 20b for an operator 21 to grip. On the opposite side to the gripping end 20b, the command rod 20 exhibits an operative end 20c predisposed to intercept the second manoeuvring appendage 17 of the safety device 13 in order to switch the safety device 13 between the stop condition and the release condition and/or the first manoeuvring device 10 of the engaging means 7 in order to displace the hook element 8 from the engaged position to the disengaged position.

In particular, the operative end 20c is defined by a tubular portion 20d perpendicular to the structure 20a of the command rod 20. The tubular portion 20d exhibits, at the opposite terminal edges thereof, respective annular portions 20e each exhibiting a larger diameter than the diameter of the tubular portion 20d.

The commanding means 19 advantageously exhibit at least a grip 22 engaged to the terminal portion 5a of the mobile frame 5. The grip 22 exhibits a substantially cylindrical conformation and develops, parallel to the terminal portion 5a, from a block 23 projecting externally from the terminal portion 5a above the first manoeuvring appendage 10 of the engaging means 7, towards the second manoeuvring appendage 17 of the safety device 13.

The grip 22 exhibits and end 22a which is tapered to facilitate engagement of the operative end 20c of the command rod 20. In particular, a cavity 20f, defined by the tubular portion 20d of the operative end 20c, can be fitted on the grip 22 to enable the command rod 20 to act on the first manoeuvring appendage 10 and move the gripping element 8 from the engaged position to the disengaged position.

The blocking mechanism 1, described herein above prevalently structurally, functions as follows.

When the operator 21 needs to displace the mobile frame 5 from the non-use position to the use position in order to access the transported object, he grips the command rod 20, as illustrated in figure 8, to arrange the operative end of the command rod 20 at the terminal portion 5a of the mobile frame 5. Thereafter the operator 21 manoeuvres the command rod 20 in such a way as to fit the operative end 20c on the grip 22 located on the terminal portion 5a. The operative end 20c engages the grip 22 which inserts axially in the cavity 20f.

By sliding the command rod 20 towards the block 23, the structure 20a of the command rod 20 intercepts the second manoeuvring appendage 17 of the safety device 13, switching the safety device 13 from the stop condition (figure 2) to the release condition (figures 5 and 7). In this situation, the second manoeuvring appendage 17 is displaced towards the engaging means 7, causing a rotation of the plate structure 14 of the safety device 13 about the second connecting pin 15. The rotation of the safety device 13 from the stop condition to the release condition is assisted by the elastic movement organ 18 which activates immediately following the action of the command rod 20 on the second manoeuvring appendage 17.

The switching of the safety device 13 from the stop condition to the release condition determines a disengagement of the striker portion 16 from the side 8c of the hook element 8.

Subsequently, the command rod 20 is displaced towards the block 23 up until the structure 20a thereof interposes between the terminal portion 5a and the first manoeuvring appendage 10.

In this position, the operator can pull the command rod 20 towards himself, by rotating the command rod 20 about the grip 22. The structure 20a of the command rod 20 intercepts the first manoeuvring appendage 10 of the engaging means 7 by rotating the plate structure 11 about the first connecting pin 9. The rotation causes the displacement of the hook element 5 from the engaged position (figures 1-5) to the disengaged position (figures 6 and 7). The contrast portion 8a disengages the fixed frame 4, enabling the mobile frame 5 to displace from the non-use position thereof. If the operator continues to pull the command rod 20 towards himself, he advantageously draws the mobile frame 5 from the non-use position to the use position at which he can grip the gripping handle 5b and disengage the command rod 20 from the terminal portion 5a of the mobile frame 5.

Once the command rod 20 is disengaged, the elastic recall element 12 brings the hook element 8 back into the original position thereof.

The command rod 20 can be advantageously re-used to displace the mobile frame 5 from the non-use position into the use position. In this case, the operator can push the command rod 20 in the direction of the terminal portion 5a of the mobile frame 5. When the mobile frame 5 reaches the non-use position, the pushing portion 8b of the hook element 8 intercepts the fixed frame 4. During this displacement the hook element 8 displaces from the engaged position to the disengaged position up until by effect of the elastic recall element 12 it clicks into the hooking position, in which the contrast portion 8a blocks the mobile frame 5 with respect to the fixed frame 4.

Finally, the operator can switch the safety device 13 from the release position to the stop position in which the portion of striker 16 engages the side 8c of the hook element 8, preventing the hook element 8 from moving into the hooking position.

The blocking mechanism of the present invention solves the problems encountered in the prior art and attains the set aims.

Primarily the arrangement of the blocking mechanism directly on the mobile frame enables the mobile frame to be moved by an operator from the ground. In particular, by use of the command rod, the mobile frame can be unblocked and moved from the non-use position into the use position, and vice-versa. In other words, the operator is not obliged to intervene directly on the blocking mechanism, which speeds up the movement operation of the mobile frame.

## Claims

1. An object-carrying device (2) comprising:
a fixed frame (4) engageable on a vehicle (3);
a mobile frame (5), predisposed to support at least an object to be transported and operatively associated to the fixed frame (4) and slidable thereon between a non-use position, in which the mobile frame (5) lies on at least a plane which is substantially parallel to the lie plane of the fixed frame (4), and a use position in which the mobile frame (5) lies on a transversal plane to the lie plane of the fixed frame (4);
a blocking mechanism (1) comprising engaging means (7) operatively associated to the object-carrying device (2) for reciprocally engaging the fixed frame (4) and the mobile frame (5), and being arranged on the mobile frame (5), **characterised in that** the engaging means (7) are operatively active on the fixed frame (4) and comprise: at least a hook element (8) engaged to the mobile frame (5) of the object-carrying device (2), the hook element (8) being mobile between an engaged position, in which it engages the fixed frame (4) to maintain the fixed frame (4) coupled to the mobile frame (5), and a disengaged position, in which it does not engage the fixed frame (4) and the mobile frame (5) is free with respect to the fixed frame (4); at least a first manoeuvring appendage (10) engaged to the hook element (8) in order for the hook element (8) to be moved at least from the engaged position to the disengaged position,
wherein the hook element (8) exhibits: at least a contrast portion (8a) predisposed to interact with the fixed frame (4) to keep the hook element (8) in the engaged position; at least a pushing portion (8b) inclined with respect to the contrast portion (8a), the pushing portion (8b) interacting with the fixed frame (4) to bring the hook element (8) towards the disengaged position when the mobile frame (5) is coupled to the fixed frame (4), and wherein the hook element (8) and the first manoeuvring appendage (10) are made in a single piece and define together a plate structure (11) having a substantially L-shaped conformation, the hook element (8) developing through a terminal portion (5a) of the mobile frame (5), the contrast portion (8a) and the pushing portion (8b) being arranged on an opposite side to the first manoeuvring appendage (10).

2. The device of claim 1, **characterised in that** the hook element (8) is rotatably engaged to the mobile frame (5) in order to rotate between the engaged position and the disengaged position.

3. The device of claim 1, **characterised in that** the engaging means (7) are provided with at least an elastic recall element (12) to displace the hook element (8) towards the engaged position thereof.

4. The device of claim 3, **characterised in that** the elastic recall element (12), preferably a helix spring (12a), is interposed between the mobile frame (5) and the hook element (8).

5. The device of any one of the preceding claims, **characterised in that** it further comprises at least a safety device (13) which is associated to the engaging means (7) in order to inhibit a movement of the hook element (8) from the engaged position to the disengaged position, the safety device (13) being switchable between a stop position, in which stop position the safety device (13) interferes with the hook element (8) to maintain the hook element (8) in the engaged position, and a release condition, in which the safety device (13) does not interfere with the hook element (8) and enables movement of the hook element (8) from the engaged position to the disengaged position.

6. The device of claim 5, **characterised in that** the safety device (13) exhibits: a striker portion (16) predisposed to engage the hook element (8) to maintain the hook element (8) in the engaged position when the safety device (13) is in the stop condition; a second manoeuvring appendage (17) for switching the safety device (13) at least from the stop condition to the release condition.

7. The device of claim 5 or 6, **characterised in that** the striker portion (16) at least partly defines a substantially L-shaped plate structure (14), the second manoeuvring appendage (17) being associated to the plate structure (14).

8. The device of claim 7, **characterised in that** the plate structure (14) is rotatably engaged to the mobile frame (5).

9. The device of claim 7 or 8, **characterised in that** the plate structure (14) of the safety device (13) develops on a transversal lie plane, preferably perpendicular, to a lie plane of the hook element (8).

10. The device of any one of claims from 6 to 9, **characterised in that** the striker portion (16) is complementarily shaped with respect to a side (8c) of the hook element (8).

11. The device of any one of claims from 7 to 10, **characterised in that** the second manoeuvring appendage (17) of the safety device (13) extends transversally, preferably perpendicularly, with respect to the lie plane of the plate structure (14), and substantially parallel with respect to the lie plane of the hook element (8).

12. The device of any one of claims from 7 to 11, **characterised in that** the safety device (13) is provided with an elastic movement organ (18), preferably a helix spring (18a), operatively interposed between the plate structure (14) and the mobile frame (5) to assist the switching of the safety device (13) from the stop condition to the release condition.

13. The device of any one of claims from 5 to 12, **characterised in that** it further comprises commanding means (19), operatively associable to the mobile frame (15) in order to switch the safety device (13) at least from the stop condition to the release condition and/or displace the hook element (8) at least from the engaged position to the disengaged position.

14. The device of claim 13, **characterised in that** the commanding means (19) are operatively associable to the mobile frame (5) in order to switch the safety device (13) from the release condition to the stop condition.

15. The device of claim 13 to 14, **characterised in that** the commanding means (19) comprise at least a command rod (20) exhibiting an operative end (20c) predisposed to intercept the second manoeuvring appendage (17) of the safety device (13) to switch the safety device (13) between the stop condition and the release condition and/or the manoeuvring appendage (19) of the engaging means (7) in order to displace the hook element (8) from the disengaged position.

16. The device of any one of claims from 13 to 15, **characterised in that** the commanding means (19) comprise at least a grip (22) constrained to the mobile frame (5), the grip (22) being engageable by the command rod (20) in order to act on the first manoeuvring appendage (10) of the engaging means (7) and to active the hook element (8).

17. The device of claim 16, **characterised in that** the grip (22) exhibits a substantially cylindrical conformation and develops substantially parallel to the terminal portion (5a) of the mobile frame (5), the operative end (20c) of the command rod (20) exhibiting a cavity (20f) engageable to the grip (22) to act on the first manoeuvring appendage (10) of the engaging means (7) and to move the hook element (8) from the engaged position to the disengaged position.

## Patentansprüche

1. Vorrichtung zum Befördern von Gegenständen (2), umfassend:
einen festen Rahmen (4), der an einem Fahrzeug (3) befestigt werden kann;
einen beweglichen Rahmen (5), der ausgelegt ist, um mindestens einen zu transportierenden Gegenstand zu stützen und der betriebswirksam mit dem festen Rahmen (4) verbunden ist und auf diesem zwischen einer Nichtbenutzungsposition, in der der bewegliche Rahmen (5) auf mindestens einer Ebene liegt, die im Wesentlichen parallel zur Liegeebene des festen Rahmens (4) verläuft, und einer Nutzungsposition, in der der bewegliche Rahmen (5) auf einer Ebene liegt, die quer zur Liegeebene des festen Rahmens (4) verläuft, gleiten kann;
einen Sperrmechanismus (1), umfassend Eingriffsmittel (7), die betriebswirksam mit der Vorrichtung zum Befördern von Gegenständen (2) verbunden ist, um gegenseitig in den festen Rahmen (4) und den beweglichen Rahmen (5) einzugreifen, und der auf dem beweglichen Rahmen (5) angeordnet ist, **dadurch gekennzeichnet, dass** die Eingriffsmittel (7) betriebswirksam auf dem festen Rahmen (4) aktiv sind und umfassen: mindestens ein Hakenelement (8), im Eingriff mit dem beweglichen Rahmen (5) der Vorrichtung zum Befördern von Gegenständen (2), wobei das Hakenelement zwischen einer Position im Eingriff, in der es im Eingriff mit dem festen Rahmen (4) ist, um den festen Rahmen (4) gekoppelt mit dem beweglichen Rahmen (5) beizubehalten, und einer gelösten Position, in der es nicht mit dem festen Rahmen (4) im Eingriff ist und der bewegliche Rahmen zum festen Rahmen (4) frei ist, beweglich ist, mindestens einen Manövrierfortsatz (10), im Eingriff mit dem Hakenelement (8), damit das Hakenelement (8) mindestens von der Position im Eingriff in die gelöste Position bewegt werden kann, wobei das Hakenelement (8) aufweist: mindestens einen Kontrastabschnitt (8a), ausgelegt, um mit dem festen Rahmen (4) zu interagieren, um das Hakenelement (8) in der Position im Eingriff beizubehalten, mindestens eine Schiebeabschnitt (8b), der geneigt zum Kontrastabschnitt (8a) angeordnet ist, wobei die Schiebeabschnitt (8b) mit dem festen Rahmen (4) interagieut, um das Hakenelement (8) hinführend zur gelösten Position zu bringen, wenn der bewegliche Rahmen (5) mit dem festen Rahmen (4) gekoppelt ist, und wobei das Hakenelement (8) und der erste Manövrierfortsatz (10) aus einem einzigen Stück bestehen und zusammen eine Plattenstruktur (11) definieren, aufweisen eine im Wesentlichen L-förmige Beschaffenheit, wobei sich das Hakenelement (8) durch einen Endabschnitt (5a) des beweglichen Rahmens (5) entwickelt und der Kontrastabschnitt (8a) und der Schiebeabschnitt (8b) auf einer Seite angeordnet sind, die dem Manövrierfortsatz (10) entgegengesetzt ist.

2. Vorrichtung nach Anspruch 1, **dadurch gekennzeichnet, dass** das Hakenelement (8) drehbar mit dem beweglichen Rahmen (5) im Eingriff ist, um sich zwischen der Position im Eingriff und der gelösten Position zu drehen.

3. Vorrichtung nach Anspruch 1, **dadurch gekennzeichnet, dass** die Eingriffsmittel (7) mit mindestens einem elastischen Rückholelement (12) versehen sind, um das Hakenelement (8) hinführend zu dessen Position im Eingriff zu versetzen.

4. Vorrichtung nach Anspruch 3, **dadurch gekennzeichnet, dass** das elastische Rückholelement (12), bei dem es sich vorzugsweise um eine Schraubenfeder (12a) handelt, zwischen dem beweglichen Rahmen (5) und dem Hakenelement (8) eingesetzt ist.

5. Vorrichtung nach einem der vorhergehenden Ansprüche, **dadurch gekennzeichnet, dass** es zudem mindestens eine Sicherheitsvorrichtung (13) umfasst, die mit den Eingriffsmitteln (7) verbunden ist, um eine Bewegung des Hakenelements (8) von der Position im Eingriff in die gelöste Position zu verhindern, wobei die Sicherheitsvorrichtung (13) zwischen einer Stoppposition, in der die Sicherheitsvorrichtung (13) mit dem Hakenelement (8) interferiert, um das Hakenelement (8) in der Position im Eingriff beizubehalten, und einem Freigabezustand umschaltbar ist, in dem die Sicherheitsvorrichtung (13) nicht mit dem Hakenelement (8) interferiert und die Bewegung des Hakenelements (8) von der Position im Eingriff in die gelöste Position ermöglicht.

6. Vorrichtung nach Anspruch 5, **dadurch gekennzeichnet, dass** die Sicherheitsvorrichtung (13) aufweist: einen Anschlagsabschnitt (16), der ausgelegt ist, um mit dem Hakenelement (8) in Eingriff zu gelangen, um das Hakenelement (8) in der Position im Eingriff beizubehalten, wenn die Sicherheitsvorrichtung (13) im Stoppzustand ist, einen zweiten Manövrierfortsatz (17) zum Umschalten der Sicherheitsvorrichtung (13) mindestens vom Stoppzustand in den Freigabezustand.

7. Vorrichtung nach Anspruch 5 oder 6, **dadurch gekennzeichnet, dass** der Anschlagsabschnitt (16) mindestens teilweise eine im Wesentlichen L-förmige Plattenstruktur (14) definiert, wobei der zweite Manövrierfortsatz (17) mit der Plattenstruktur (14) verbunden ist.

8. Vorrichtung nach Anspruch 7, **dadurch gekennzeichnet, dass** die Plattenstruktur (14) drehbar mit dem beweglichen Rahmen (5) im Eingriff ist.

9. Vorrichtung nach Anspruch 7 oder 8, **dadurch gekennzeichnet, dass** sich die Plattenstruktur (14) der Sicherheitsvorrichtung (13) auf einer quer verlaufenden Liegeebene entwickelt, die vorzugsweise senkrecht ist, zu einer Liegeebene des Hakenelements (8).

10. Vorrichtung nach einem der Ansprüche 6 bis 9, **dadurch gekennzeichnet, dass** der Anschlagsabschnitt (16) ergänzend zu einer Seite (8c) des Hakenelements (8) ausgebildet ist.

11. Vorrichtung nach einem der Ansprüche 7 bis 10, **dadurch gekennzeichnet, dass** sich der zweite Manövrierfortsatz (17) der Sicherheitsvorrichtung (13) quer, vorzugsweise senkrecht, zur Liegeebene der Plattenstruktur (14) erstreckt und im Wesentlichen parallel zur Liegeebene des Hakenelements (8) verläuft.

12. Vorrichtung nach einem der Ansprüche 7 bis 11, **dadurch gekennzeichnet, dass** die Sicherheitsvorrichtung (13) mit einem elastischen Bewegungsorgan (18) versehen ist, vorzugsweise einer Schraubenfeder (18a), betriebswirksam eingesetzt zwischen der Plattenstruktur (14) und dem beweglichen Rahmen (5), um das Umschalten der Sicherheitsvorrichtung (13) vom Stoppzustand in den Freigabezustand zu unterstützten.

13. Vorrichtung nach einem der Ansprüche 5 bis 12, **dadurch gekennzeichnet, dass** sie zudem Befehlsmittel (19) umfasst, die betriebswirksam mit dem beweglichen Rahmen (15) verbunden werden können, um die Sicherheitsvorrichtung (13) mindestens vom Stoppzustand in den Freigabezustand umzuschalten und/oder das Hakenelement (8) mindestens von der Position im Eingriff in die gelöste Position zu versetzen.

14. Vorrichtung nach Anspruch 13, **dadurch gekennzeichnet, dass** die Befehlsmittel (19) betriebswirksam mit dem beweglichen Rahmen (5) verbunden werden können, um die Sicherheitsvorrichtung (13) vom Freigabezustand in den Stoppzustand umzuschalten.

15. Vorrichtung nach Anspruch 13 bis 14, **dadurch gekennzeichnet, dass** die Befehlsmittel (19) mindestens eine Befehlsstange (20) umfassen, aufweisend ein betriebswirksames Ende (20c), das ausgelegt ist, um den zweiten Manövrierfortsatz (17) der Sicherheitsvorrichtung (13) abzufangen, um die Sicherheitsvorrichtung (13) zwischen dem Stoppzustand und dem Freigabezustand und/oder den Manövrierfortsatz (19) der Eingriffsmittel (7) umzuschalten, um das Hakenelement (8) aus der gelösten Position zu versetzen.

16. Vorrichtung nach Anspruch 13 bis 15, **dadurch gekennzeichnet, dass** die Befehlsmittel (19) mindestens einen Griff (22) umfassen, der mit dem beweglichen Rahmen (5) fest gekuppelt ist, wobei der Griff (22) durch die Befehlsstange (20) eingegriffen werden kann, um auf den ersten Manövrierfortsatz (10) der Eingriffsmittel (7) zu wirken und das Hakenelement (8) zu aktivieren.

17. Vorrichtung nach Anspruch 16, **dadurch gekennzeichnet, dass** der Griff (22) eine im Wesentlichen zylindrische Beschaffenheit aufweist und sich im Wesentlichen parallel zum Endabschnitt (5a) des beweglichen Rahmens (5) erstreckt, wobei das betriebswirksame Ende (20c) der Befehlsstange (20) einen Hohlraum (20f) aufweist, der mit dem Griff (22) in Eingriff gelangen kann, um auf den ersten Manövrierfortsatz (10) der Eingriffsmittel (7) zu wirken und das Hakenelement (8) aus der Position im Eingriff in die gelöste Position zu bewegen.

## Revendications

1. Dispositif porteur d'objets (2) comprenant :
un châssis fixe (4) pouvant se mettre en prise sur un véhicule (3) ;
un châssis mobile (5), prédisposé pour supporter au moins un objet à transporter et associé fonctionnellement au châssis fixe (4) et pouvant coulisser sur celui-ci entre une position non-fonctionnelle, dans laquelle le châssis mobile (5) repose au moins sur un plan étant substantiellement parallèle au plan d'appui du châssis fixe (4), et une position fonctionnelle dans laquelle le châssis mobile (5) repose sur un plan transversal au plan d'appui du châssis fixe (4) ;
un mécanisme de blocage (1) comprenant des moyens d'engagement (7) associés fonctionnellement au dispositif porteur d'objets (2) pour réciproquement se mettre en prise avec le châssis fixe (4) et le châssis mobile (5), et étant disposé sur le châssis mobile (5), **caractérisé en ce que** les moyens d'engagement (7) sont fonctionnellement actifs sur le châssis fixe (4) et comprennent : au moins un élément d'accrochage (8) engagé dans le châssis mobile (5) du dispositif porteur d'objets (2), l'élément d'accrochage (8) étant mobile entre une position engagée, dans laquelle il se met en prise avec le châssis fixe (4) pour maintenir le châssis fixe (4) accouplé au châssis mobile (5), et une position désengagée, dans laquelle il n'est pas en prise avec le châssis fixe (4) et le châssis mobile (5) est libre par rapport au châssis fixe (4) ; au moins un premier appendice de manoeuvre (10) se mettant en prise avec l'élément d'accrochage (8) de sorte que l'élément d'accrochage (8) puisse être déplacé au moins de la position engagée à la position désengagée, dans lequel l'élément d'accrochage (8) présente : au moins une partie de contraste (8a) prédisposée pour interagir avec le châssis fixe (4) pour maintenir l'élément d'accrochage (8) dans la position engagée ; au moins une partie de poussée (8b) inclinée par rapport à la partie de contraste (8a), la partie de poussée (8b) interagissant avec le châssis fixe (4) pour amener l'élément d'accrochage (8) vers la position désengagée lorsque le châssis mobile (5) est accouplé au châssis fixe (4), et dans lequel l'élément d'accrochage (8) et le premier appendice de manoeuvre (10) forment un seul tenant et définissent ensemble une structure en plaque (11) ayant une configuration substantiellement en forme de « L », l'élément d'accrochage (8) se prolongeant à travers une partie terminale (5a) du châssis mobile (5), la partie de contraste (8a) et la partie de poussée (8b) étant disposées sur un côté opposé au premier appendice de manoeuvre (10).

2. Dispositif selon la revendication 1, **caractérisé en ce que** l'élément d'accrochage (8) se met en prise de façon rotative avec le châssis mobile (5) afin de tourner entre la position engagée et la position désengagée.

3. Dispositif selon la revendication 1, **caractérisé en ce que** les moyens d'engagement (7) sont pourvus d'au moins un élément de rappel élastique (12) pour déplacer l'élément d'accrochage (8) vers sa position engagée.

4. Dispositif selon la revendication 3, **caractérisé en ce que** l'élément de rappel élastique (12), de préférence un ressort spirale (12a), est interposé entre le châssis mobile (5) et l'élément d'accrochage (8).

5. Dispositif selon l'une quelconque des revendications précédentes, **caractérisé en ce qu'**il comprend de plus au moins un dispositif de sécurité (13) étant associé au moyens d'engagement (7) afin d'empêcher un mouvement de l'élément d'accrochage (8) de la position engagée à la position désengagée, le dispositif de sécurité (13) pouvant passer d'une position d'arrêt, dans laquelle position d'arrêt le dispositif de sécurité (13) interfère avec l'élément d'accrochage (8) pour maintenir l'élément d'accrochage (8) dans la position engagée, à une condition de relâchement, dans laquelle le dispositif de sécurité (13) n'interfère pas avec l'élément d'accrochage (8) et permet le mouvement de l'élément d'accrochage (8) de la position engagée à la position désengagée.

6. Dispositif selon la revendication 5, **caractérisé en ce que** le dispositif de sécurité (13) présente : une portion de butée (16) prédisposée pour se mettre en prise avec l'élément d'accrochage (8) pour maintenir l'élément d'accrochage (8) dans la position engagée lorsque le dispositif de sécurité (13) se trouve dans la condition d'arrêt ; un second appendice de manoeuvre (17) servant à faire passer le dispositif de sécurité (13) au moins de la condition d'arrêt à la condition de relâchement.

7. Dispositif selon les revendications 5 ou 6, **caractérisé en ce que** la portion de butée (16) définit au moins en partie une structure en plaque (14) substantiellement en forme de « L », le second appendice de manoeuvre (17) étant associé à la structure en plaque (14).

8. Dispositif selon la revendication 7, **caractérisé en ce que** la structure en plaque (14) se met en prise de façon rotative avec le châssis mobile (5).

9. Dispositif selon les revendications 7 ou 8, **caractérisé en ce que** la structure en plaque (14) du dispositif de sécurité (13) se prolonge sur un plan d'appui transversal, de préférence perpendiculaire, par rapport à un plan d'appui de l'élément d'accrochage (8).

10. Dispositif selon l'une quelconque des revendications de 6 à 9, **caractérisé en ce que** la portion de butée (16) a une forme complémentaire par rapport à un côté (8c) de l'élément d'accrochage (8).

11. Dispositif selon l'une quelconque des revendications de 7 à 10, **caractérisé en ce que** le second appendice de manoeuvre (17) du dispositif de sécurité (13) se prolonge transversalement, de préférence perpendiculairement, par rapport au plan d'appui de la structure en plaque (14), et de façon substantiellement parallèle par rapport au plan d'appui de l'élément d'accrochage (8).

12. Dispositif selon l'une quelconque des revendications de 7 à 11, **caractérisé en ce que** le dispositif de sécurité (13) est pourvu d'un organe de mouvement élastique (18), de préférence un ressort spirale (18a), interposé fonctionnellement entre la structure en plaque (14) et le châssis mobile (5) pour assister le dispositif de sécurité (13) à passer de la condition d'arrêt à la condition de relâchement.

13. Dispositif selon l'une quelconque des revendications de 5 à 12, **caractérisé en ce qu'**il comprend de plus des moyens de commande (19), étant fonctionnellement associés au châssis mobile (15) afin de faire passer le dispositif de sécurité (13) au moins de la condition d'arrêt à la condition de relâchement et/ou déplacer l'élément d'accrochage (8) au moins de la position engagée à la position désengagée.

14. Dispositif selon la revendication 13, **caractérisé en ce que** les moyens de commande (19) peuvent fonctionnellement s'associer au châssis mobile (5) afin de faire passer le dispositif de sécurité (13) de la condition de relâchement à la condition d'arrêt.

15. Dispositif selon les revendications 13 à 14, **caractérisé en ce que** les moyens de commande (19) comprennent au moins une tige de commande (20) présentant une extrémité fonctionnelle (20c) prédisposée pour intercepter le second appendice de manoeuvre (17) du dispositif de sécurité (13) pour commuter le dispositif de sécurité (13) de la condition d'arrêt à la condition de relâchement et/ou l'appendice de manoeuvre (19) des moyens d'engagement (7) afin de déplacer l'élément d'accrochage (8) de la position désengagée.

16. Dispositif selon les revendications de 13 à 15, **caractérisé en ce que** les moyens de commande (19) comprennent au moins une poignée (22) fixée au châssis mobile (5), la poignée (22) pouvant se mettre en prise avec la tige de commande (20) afin d'agir sur le premier appendice de manoeuvre (10) des moyens d'engagement (7) et pour activer l'élément d'accrochage (8).

17. Dispositif selon la revendication 16, **caractérisé en ce que** la poignée (22) présente une configuration substantiellement cylindrique et se prolonge de façon substantiellement parallèle à la partie terminale (5a) du châssis mobile (5), l'extrémité fonctionnelle (20c) de la tige de commande (20) présentant une cavité (20f) pouvant se mettre en prise avec la poignée (22) pour agir sur le premier appendice de manoeuvre (10) des moyens d'engagement (7) et pour déplacer l'élément d'accrochage (8) de la position engagée à la position désengagée.
